# EUROPEAN PATENT APPLICATION

(11) **EP 2 146 481 A2**
(43) Date of publication of application: **20.01.2010**
(21) Application number: 09163899.9
(22) Date of filing: 26.06.2009
(51) Int. Cl.: H04L 29/06, H04N 5/913

(54) **IP Streaming copy control method and system**

(30) Priority: 15.07.2008 JP 2008184194
(71) Applicant: NEC Corporation, Minato-ku Tokyo (JP)
(72) Inventor: Iwamura, Hisashi, Tokyo (JP); Kamiyama, Masahiko, Tokyo (JP); Seo, Tomoyuki, Tokyo (JP)
(74) Representative: Betten & Resch

(57) **Abstract**

Copy control desired by a streaming content provider is enabled using a relatively simple configuration. In an IP streaming copy control method, even when a client terminal receives streaming content which is not assigned with copy control information via a network from a streaming server, if the streaming content is streaming content satisfying a condition beforehand set to the client terminal, the client terminal outputs a reproduced signal of the streaming by assigning copy control information to the reproduced signal and then delivers the reproduced signal to a TV/video recorder.

## Description

This application is based upon and claims the benefit of priority from Japanese patent application No. 2008-184194, filed on July 15, 2008, the disclosure of which is incorporated herein in its entirety by reference.

### BACKGROUND OF THE INVENTION

### Field of the Invention

The present invention relates to a copy control technique for content received via a network from a content providing server through a streaming service.

### Description of the Prior Art

In a digital streaming broadcasting system which employs a satellite or a system which conducts streaming delivery of digital content, e.g., a film or a music piece having a large amount of data via a high-speed communication line including an optical fiber line or an Asymmetrical Digital Subscriber Line (ADSL), when a user operating a user terminal such as a Set Top Box (STB) or a personal computer accesses a content server to request delivery of desired content, the server sends the content through streaming transmission to the user terminal. The user terminal receives and reproduces the streaming content into a reproduced signal to be fed to video and audio apparatuses such as a Television set (TV). Reference is to be made to Japanese Patent Laid-Open Pub. Nos. 2000-270309 and 2002-111652, Published Patent Pub. No. 2005-514716, and Japanese Patent Laid-Open Pub. No. 2007-088704.

In the conventional IP streaming services, copy control is not carried out for the output video, that is, the output video can be directly recorded in the form of an analog signal. This leads to a problem that interesting and attractive contents are not sufficiently provided by the content producers or providers.

In accordance with description of, for example, Published Patent Pub. No. 2005-514716, it is possible to control absolute copy prohibition, one-time copy, copy between generations, and unlimited copy by combining Digital Rights Management (DRM) and copy prevention for contents provided via a digital communication network. However, description has not given of how to provide DRM with control information of absolute copy prohibition, one-time copy, copy between generations, and unlimited copy. It is likely that placing such information in DRM makes the configuration of DRM more complex.

In accordance with Japanese Patent Laid-Open Pub. No. 2007-088704, a server configuring streaming system in which a terminal to reproduce content is coupled via an electronic communication unit with an authentication server which conducts first authentication for the use of the content. The terminal includes a server configuring module, a first content storage to store the content, a first decoder to conduct first decoding for the content, a reproducing and viewing module to carry out streaming reproduction for the content, a second key creation module, a second encryption module to sequentially conduct secondary encryption, and a secondary key insertion module. In the system structure, the terminal smoothly accomplishes the streaming reproduction by storing the received stream content in a storage thereof and prevents unauthorized copy of the content.

However, the configuration includes a server section in the terminal wherein the data for which the first decoding has been conducted is sent via a content gateway module to the reproducing and viewing module. For the reproduced signals of the content, the secondary encryption is sequentially carried out. In the second and subsequent reproduction steps, there is hence required a module to view the content by conducting the secondary decoding for the secondary-encrypted signals. This accordingly makes the terminal configuration more complicated.

### SUMMARY OF THE INVENTION

It is therefore an exemplary object of the present invention to provide a copy preventive method capable of dissolving the problem of the streaming content received via a network from a content providing server.

In accordance with an exemplary aspect of the present invention, there is provided an IP streaming copy control method, wherein when a client terminal receives streaming content which is not assigned with copy control information via a network from a streaming server and which is streaming content satisfying a condition beforehand set to the client terminal, the client, terminal outputs a reproduced signal of the streaming content by assigning copy control information to the reproduced signal.

In accordance with an exemplary aspect of the present invention, there is provided an IP streaming copy control system including a streaming server for providing streaming content via a network and a client terminal for receiving the streaming content from the streaming server and outputting a reproduced signal. The client terminal includes copy control information assigning means including a function in which when the client terminal receives streaming content which is not assigned with copy control information via a network from a streaming server and which is streaming content satisfying a condition beforehand set to the client terminal, copy control information is assigned, when the client terminal outputs a reproduced signal of the streaming content, to the reproduced signal.

In accordance with an exemplary aspect of the present invention, there is provided a client terminal for use with an IP streaming copy control system including copy control information assigning means in which when the client terminal receives streaming content which is not assigned with copy control information via a network from a streaming server and which is streaming content satisfying a condition beforehand set to the client terminal, copy control information is assigned, when the client terminal outputs a reproduced signal of the streaming content, to the reproduced signal.

In accordance with an exemplary aspect of the present invention, there is provided a program for making a computer execute processing in which when a client terminal receives streaming content which is not assigned with copy control information via a network from a streaming server and which is streaming content satisfying a condition beforehand set to the client terminal, the client terminal outputs a reproduced signal of the streaming content by assigning copy control information to the reproduced signal.

### BRIEF DESCRIPTION OF THE DRAWINGS

The exemplary objects and features of the present invention will become more apparent from the consideration of the following detailed description taken in conjunction with the accompanying drawings in which:
FIG. 1 is a schematic block diagram showing an outline of an exemplary embodiment of an IP streaming copy control system in accordance with the present invention;
FIG. 2 is a flowchart to explain operation of a first exemplary embodiment of the present invention; and
FIG. 3 is a flowchart to explain operation of a second exemplary embodiment of the present invention.

### DESCRIPTION OF THE EXEMPLARY EMBODIMENTS

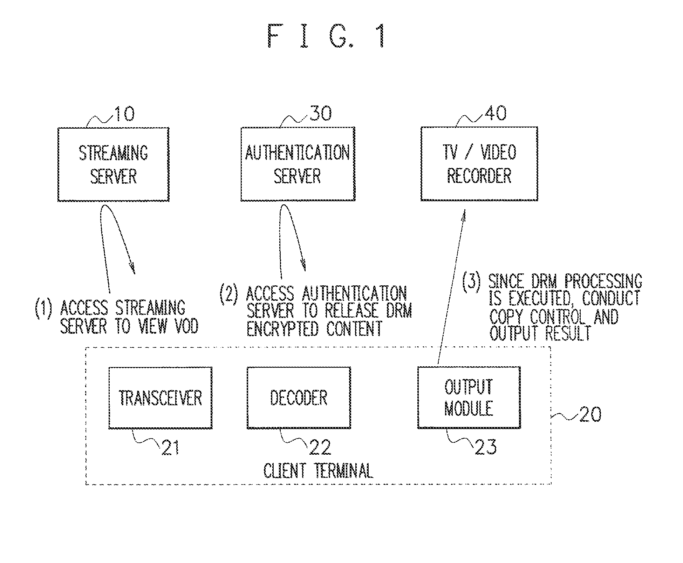

FIG. 1 shows an outline of an exemplary embodiment of an IP streaming copy control system in accordance with the present invention.

The IP streaming copy control system of the exemplary embodiment includes a streaming server 10 which conducts delivery of streaming content from a content provider via a satellite broadcast wave, the Internet, or the like; a client terminal 20 including a Set Top Box (STB), a Personal Computer (PC), or the like which is installed in a home and which can access the streaming server 10 to receive the content therefrom; a DRM authentication server 30 which is connected to the client terminal 20 according to necessity and which delivers key information or the like thereto so that the encrypted content delivered from the streaming server 10 is available; and a TV/video recorder 40 to display or to record video or audio of the content reproduced from the client terminal 20. The video recorder 40 is a general recorder, e.g., an analog recorder or a digital recorder.

The client terminal 20 includes a transceiver 21 to communicate with the streaming server 10 and the DRM authentication server 30, a decoder module 22 which decodes the streaming content from the streaming server 10 to output a reproduced signal, and an output module 23 to deliver the reproduced signal from the decoder 22 to the TV/video recorder 40. The client terminal 20 includes a large-capacity external storage such as a hard disk drive to store the received content.

In the client terminal 20, the transceiver 21 accesses the authentication server 30 to attain key information to release the DRM encrypted content fed from the streaming server 10. The terminal 20 also accesses the streaming server 10 by Video On Demand (VOD) to receive the DRM encrypted stream content therefrom.

If the received stream content is DRM encrypted content, the decoder 22 decodes the DRM encrypted content using the key information from the authentication server 30 to thereby reproduce the content. The decoder 22 further includes a copy control information assigning module which assigns, in the above situation, copy control information (macrovision, Copy Generation Management System Analog (CGMS-A), Copy Generation Management System Digital (CGMS-D), etc.) to the reproduced signal to send the resultant signal to the output module 23. If the received stream content is other than the DRM encrypted content, the decoder 22 directly feeds the reproduced signal to the output module 23 without assigning the copy control information.

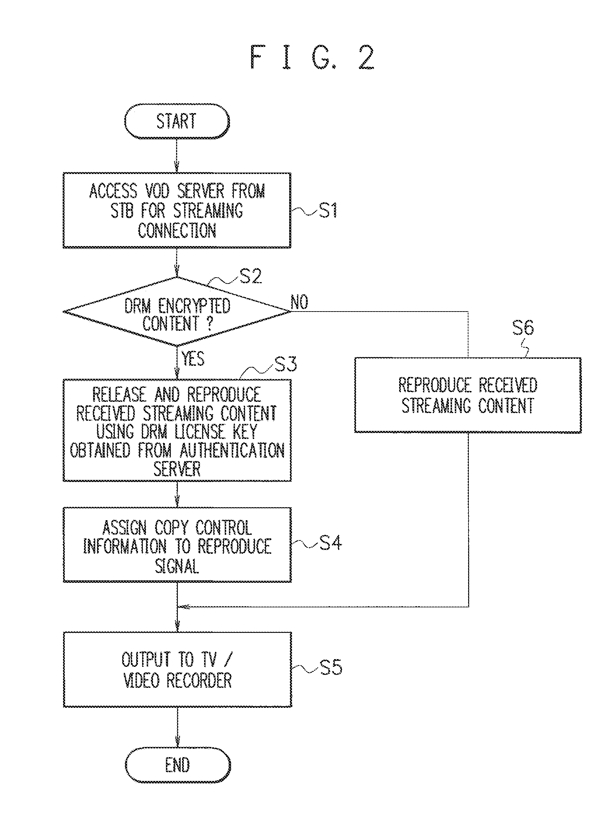

FIG. 2 is a flowchart showing operation of the first exemplary embodiment. In the flowchart of the first embodiment, an STB disposed as a client terminal accesses a VOD server employed as a streaming server. Description will now be given of operation of the exemplary embodiment by referring to FIGS. 1 and 2.

On the streaming server 10 side, the DRM encryption is carried out for the content for which copy control is desired. Any type of DRM is available only if the STB corresponds to the DRM. The end user selects content for the viewing thereof and accesses the VOD server from the STB to establish streaming connection (S1).

If the selected content is DRM encrypted content (yes in S2), the received stream content is released by the key information attained from the authentication server 30 to resultantly reproduce the content (S3). To output the content from a video terminal port to an analog interface, since the content has been DRM encrypted, CGMS-A "copy prohibited" and macrovision are assigned to the content, which is then fed to the TV/video recorder 40 (S5). To output the content from a video terminal port to a digital interface, CGMS-D "copy prohibited" if fixedly assigned to the content (S4) and then the content is delivered to the TV/video recorder 40 (S5).

If the selected stream content is other than DRM encrypted content (no in S2), the received stream content is immediately reproduced (S6) without assigning copy control information thereto and is then fed to the TV/video recorder 40 (S5).

In accordance with the first exemplary embodiment, by cooperatively adopting the technique used in the IP streaming and the copy control technique employed in the TV broadcasting, copy control can be conducted for the video output by use of a relatively simple configuration. Since the copy control desired by the content provider is enabled by using the existing technique of the TV broadcasting, it is possible to provide excellent contents on the IP platform.

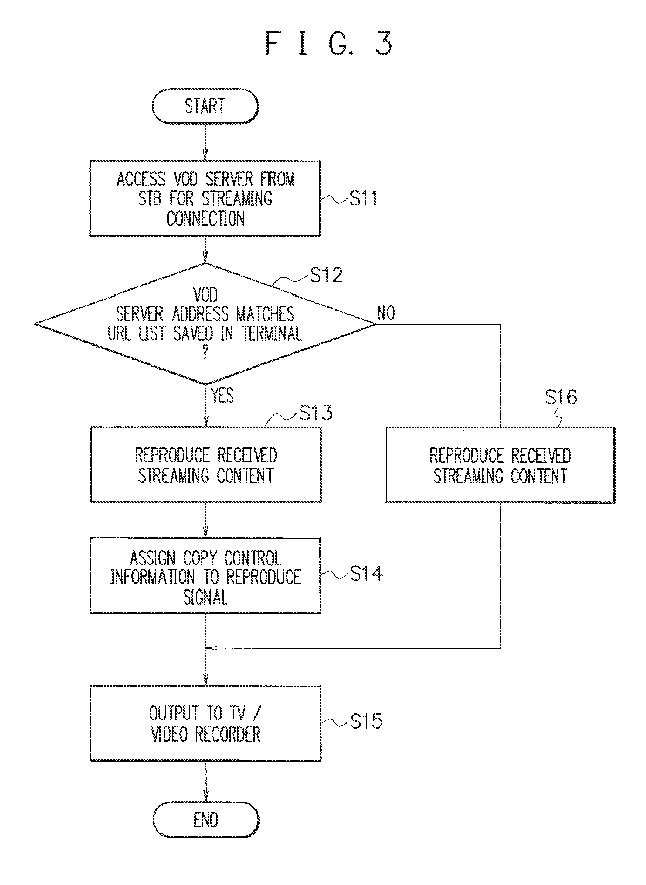

FIG. 3 is a flowchart to explain operation of the second exemplary embodiment. In this exemplary embodiment, a Uniform Resource Locator (URL) is adopted to carry out the copy control. By Referring to FIGS. 1 and 3, description will be given of operation of the second exemplary embodiment.

Before conducting the copy control, contents for which the copy control is desired are registered to a URL list and the list is stored in the STB. Also, the URL list may be stored, for example, in the terminal in advance or may be acquired from a server. The end user selects desired content and accesses the VOD server from the STB to establish streaming connection (S11).

The address of the VOD server is collated with the URL list stored in the terminal (S12). In a situation wherein the address matches with the URL list (yes in S12), if the received stream content is reproduced to be delivered from a video terminal port to an analog interface, CGMS-A "copy prohibited" and macrovision are assigned to the content (S13, S14), which is then fed to the TV/video recorder 40 (S15). If the received stream content is reproduced to be delivered from a video terminal port to a digital interface, CGMS-D "copy prohibited" is fixedly assigned to the content (S13, S14) and then the content is sent to the TV/recorder 40 (S15).

Assume, for example, a list including a URL "www.xxx.co.jp" has been stored in the terminal. When the end user selects content on the "www.xxx.co.jp" site from the STB to establish streaming connection, since the URL list includes "wwiv.x;x.co.jp", the copy control information is assigned to the stream content in the operation in which the received stream content is reproduced to be fed from the video terminal port.

If the address of the VOD server thus accessed is not included in the URL list (no in S12), the received stream content is directly reproduced (S16) without assigning copy control information and is fed to the TV/video recorder 40 (S15). If the selected content is DRM encrypted content, the encryption of the received stream content is released by use of a DRM license key obtained from the authentication server 30 before the content is reproduced in steps S13 and S16.

In accordance with the second exemplary embodiment, even if IP streaming content for which the copy control is not conducted is received, copy control information can be assigned thereto on the user terminal or client terminal side. Therefore, by using a relatively simple configuration, the copy control desired by the content provider can be carried out. It is hence possible for the content provider to provide excellent contents through the IP streaming service.

The processing of the client terminal in the exemplary embodiments may be realized by executing a computer program, which implements the processing of the present invention, by a Central Processing Unit (CPU) installed in the client terminal. In the situation, the program may be recorded on a recording medium to be provided to the user. The program may also be transmitted via the Internet or any other transmission medium to be provided to the user. The program is then loaded in an internal ROM or the like to be executed by a CPU.

In the exemplary embodiments, an STB is adopted as a client terminal and is connected to a TV set. However, any apparatus which can receive streaming content of a personal computer, a game player, or a general household electric appliance and which can create a reproduced signal of the content is available as the client terminal of the present invention.

In accordance with the present invention, there is disposed a module to automatically assign, according to a condition beforehand registered to the user terminal or client terminal side, copy control information also to IP streaming content for which the copy control has not been carried out. Hence, the copy control desired by the content provider can be accomplished using a relatively simple configuration, and the content provider can provide excellent contents.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined claims.

An example 1 is an Internet Protocol (IP) streaming copy control method, wherein when a client terminal receives streaming content which is not assigned with copy control information via a network from a streaming server and which is streaming content satisfying a condition beforehand set to the client terminal, the client terminal outputs a reproduced signal of the streaming content by assigning copy control information to the reproduced signal.

An example 2 is the IP streaming copy control method in accordance with the example 1, wherein the condition includes that the streaming content received by the client terminal is beforehand Digital Rights Management (DRM) encrypted.

An example 3 is the IP streaming copy control method in accordance with the example 1, wherein the condition includes that a content providing server which provides streaming content via a network has an address matching with a Uniform Resource Locator (URL) beforehand registered to the client terminal.

An example 4 is the IP streaming copy control method in accordance with one of the examples 1 to 3, wherein the copy control information includes Copy Generation Management System. Analog (CGMS-A) "copy prohibited" and macrovision for an analog interface and the copy control information includes Copy Generation Management System Digital (CGMS-D) "copy prohibited" for a digital interface.

An example 5 is an IP streaming copy control system comprising: a streaming server for providing streaming content via a network; and a client terminal for receiving the streaming content from the streaming server and outputting a reproduced signal, wherein the client terminal comprises copy control information assigning means including a function in which when the client terminal receives streaming content which is not assigned with copy control information via a network from a streaming server and which is streaming content satisfying a condition beforehand set to the client terminal, copy control information is assigned, when the client terminal outputs a reproduced signal of the streaming content, to the reproduced signal.

An example 6 is the IP streaming copy control system in accordance with the example 5, wherein the copy control information assigning means includes a function for assigning the copy control information to the reproduced signal under the condition that the streaming content received by the client terminal is beforehand DRM encrypted.

An example 7 is the IP streaming copy control system in accordance with the example 5, wherein the copy control information assigning means includes a function for assigning the copy control information to the reproduced signal under the condition that a content providing server which provides streaming content via a network has an address matching with a URL beforehand registered to the client terminal.

An example 8 is the IP streaming copy control system in accordance with one of the exasmples 5 to 7, wherein the copy control information includes CGMS-A "copy prohibited" and macrovision for an analog interface and the copy control information includes CGMS-D "copy prohibited" for a digital interface.

An example 9 is a client terminal for use with an IP streaming copy control system in accordance with the example 5, comprising copy control information assigning means in which when the client terminal receives streaming content which is not assigned with copy control information via a network from a streaming server and which is streaming content satisfying a condition beforehand set to the client terminal, copy control information is assigned, when the client terminal outputs a reproduced signal of the streaming content, to the reproduced signal.

An example 10 is the client terminal in accordance with the example 9, wherein the copy control information assigning means includes a function for assigning the copy control information to the reproduced signal under a condition that the streaming content received by the client terminal is beforehand DRAM encrypted.

An example 11 is the client terminal in accordance with the example 9, wherein the copy control information assigning means includes a function for assigning the copy control information to the reproduced signal under a condition that a content providing server which provides streaming content via a network has an address matching with a URL beforehand registered to the client terminal.

An example 12 is the client terminal in accordance with one of the examples 9 to 11, wherein the copy control information includes CGMS-A "copy prohibited" and macrovision for an analog interface and the copy control information includes CGMS-D "copy prohibited" for a digital interface.

An example 13 is a program for making a computer execute processing in which when a client terminal receives streaming content which is not assigned with copy control information via a network from a streaming server and which is streaming content satisfying a condition beforehand set to the client terminal, the client terminal outputs a reproduced signal of the streaming content by assigning copy control information to the reproduced signal.

An example 14 is the program in accordance with the example 13, wherein the program makes the computer execute processing for assigning the copy control information to the reproduced signal under the condition that the streaming content received by the client terminal is beforehand DRM encrypted.

An example 15 is the program in accordance with the example 13, wherein the program makes the computer execute processing for assigning the copy control information to the reproduced signal under the condition that a content providing server which provides streaming content via a network has an address matching with a URL beforehand registered to the client terminal.

According to one embodiment a Copy control desired by a streaming content provider is enabled using a relatively simple configuration. In an IP streaming copy control method, even when a client terminal receives streaming content which is not assigned with copy control information via a network from a streaming server, if the .streaming content is streaming content satisfying a condition beforehand set to the client terminal, the client terminal outputs a reproduced signal of the streaming by assigning copy control information to the reproduced signal and then delivers the reproduced signal to a TV/video recorder.

## Claims

1. An Internet Protocol (IP) streaming copy control method, wherein when a client terminal receives streaming content which is not assigned with copy control information via a network from a streaming server and which is streaming content satisfying a condition beforehand set to the client terminal, the client terminal outputs a reproduced signal of the streaming content by assigning copy control information to the reproduced signal.

2. The IP streaming copy control method in accordance with claim 1, wherein the condition includes that the streaming content received by the client terminal is beforehand Digital Rights Management (DRM) encrypted.

3. The IP streaming copy control method in accordance with claim 1 or 2, wherein the condition includes that a content providing server which provides streaming content via a network has an address matching with a Uniform Resource Locator (URL) beforehand registered to the client terminal.

4. The IP streaming copy control method in accordance with one of claims 1 to 3, wherein the copy control information includes Copy Generation Management System Analog (CGMS-A) "copy prohibited" and macrovision for an analog interface and the copy control information includes Copy Generation Management System Digital (CGMS-D) "copy prohibited" for a digital interface.

5. An IP streaming copy control system comprising:
a streaming server for providing streaming content via a network; and
a client terminal for receiving the streaming content from the streaming server and outputting a reproduced signal, wherein
the client, terminal comprises copy control information assigning means including a function in which when the client terminal receives streaming content which is not assigned with copy control information via a network from a streaming server and which is streaming content satisfying a condition beforehand set to the client terminal, copy control information is assigned, when the client terminal outputs a reproduced signal of the streaming content, to the reproduced signal.

6. The IP streaming copy control system in accordance with claim 5, wherein the copy control information assigning means includes a function for assigning the copy control information to the reproduced signal under the condition that the streaming content received by the client terminal is beforehand DRM encrypted.

7. The IP streaming copy control system in accordance with claim 5 or 6, wherein the copy control information assigning means includes a function for assigning the copy control information to the reproduced signal under the condition that a content providing server which provides streaming content via a network has an address matching with a URL beforehand registered to the client terminal.

8. The IP streaming copy control system in accordance with one of claims 5 to 7, wherein the copy control information includes CGMS-A "copy prohibited" and macrovision for an analog interface and the copy control information includes CGMS-D "copy prohibited" for a digital interface.

9. A client terminal for use with an IP streaming copy control system in accordance with one of claims 5 to 8, comprising copy control information assigning means in which when the client terminal receives streaming content which is not assigned with copy control information via a network from a streaming server and which is streaming content satisfying a condition beforehand set to the client terminal, copy control information is assigned, when the client terminal outputs a reproduced signal of the streaming content, to the reproduced signal.

10. The client terminal in accordance with claim 9, wherein the copy control information assigning means includes a function for assigning the copy control information to the reproduced signal under a condition that the streaming content received by the client terminal is beforehand DRM encrypted.

11. The client terminal in accordance with claim 9, wherein the copy control information assigning means includes a function for assigning the copy control information to the reproduced signal under a condition that a content providing server which provides streaming content via a network has an address matching with a URL beforehand registered to the client terminal.

12. The client terminal in accordance with one of claims 9 to 11, wherein the copy control information includes CGMS-A "copy prohibited" and macrovision for an analog interface and the copy control information includes CGMS-D "copy prohibited" for a digital interface,

13. A program for making a computer execute processing in which when a client terminal receives streaming content which is not assigned with copy control information via a network from a streaming server and which is streaming content satisfying a condition beforehand set to the client terminal, the client terminal outputs a reproduced signal of the streaming content by assigning copy control information to the reproduced signal.

14. The program in accordance with claim 13, wherein the program makes the computer execute processing for assigning the copy control information to the reproduced signal under the condition that the streaming content received by the client terminal is beforehand DRM encrypted.

15. The program in accordance with claim 13, wherein the program makes the computer execute processing for assigning the copy control information to the reproduced signal under the condition that a content providing server which provides streaming content via a network has an address matching with a URL beforehand registered to the client terminal.
